# EUROPEAN PATENT APPLICATION

(11) **EP 4 483 987 A1**
(43) Date of publication of application: **01.01.2025**
(21) Application number: 23182526.6
(22) Date of filing: 29.06.2023
(51) Int. Cl.: B01D 53/04

(54) **SORBENT FILTER FOR USE IN A SORBENT FILTER ASSEMBLY WITHIN AN AIR CONTACTOR OF A DIRECT AIR CARBON CAPTURE UNIT**

(71) Applicant: Siemens Energy Global GmbH & Co. KG, 81739 München (DE)
(72) Inventor: Svensson, Oscar, 582 55 Linköping (SE); Nilsson, Linnea, 582 46 Linköping (SE); Jaksch, Peter, 60211 Norrköping (SE); Jonsson, David, 61630 Åby (SE)

(57) **Abstract**

In one aspect, a sorbent filter (300) for use in direct air capture of Carbon Dioxide includes a first support (306) , a second support (308), a first mesh (310), and a second mesh (312), a frame (314) defined by the first support (306), second support (308), the first mesh (310) and the second mesh (312), a cavity (322) within the frame (314) defined by a gap between the first mesh (310) and second mesh (312), a sorbent filter media (304), where the cavity (322) is filled with the sorbent filter media (304) and a flow is directed through the sorbent filter media (304).

## Description

### FIELD OF THE INVENTION

The present invention relates to a sorbent filer and a sorbent filter assembly for use in a direct air carbon capture (DAC) unit or system. More specifically, the invention relates to a sorbent filter that is filled with solid sorbent used in a DAC-Unit.

### BACKGROUND OF THE INVENTION

According to the state of the art, sorbent filters that utilize a solid sorbent have been limited to framed structures that support a flat sorbent bed between a sheet of fabric, wire mesh or other material designed to contain the loose sorbent material. Multi layers of flat sorbent beds have been used with a rigid support being utilized to secure each layer and the sheet material utilized to contain the loose sorbent. The containment material has to allow an air flow to pass through the filter but contain the loose sorbent, these requirements result in the need for a separate support configuration being required to hold the containment material in place over the length and width of each particular layer. This has the disadvantage of increasing the thermal mass of the filter because more material is required for support, which must be heated or cooled to achieve an even temperature in the sorbent bed, as well as increasing the complexity and cost of the filter itself. The air flow through filters that utilize flat beds require the airflow to be redirected at substantially right angles in order to pass through the layers of framed sorbent in order to increase the surface area of the filter, as opposed to have the airflow impinge on a single layer of sorbent. This has the disadvantage of increasing the air flow requirements of the DAC-unit and increasing the pressure drop through the filter structure. Additionally, the filters are an integral part of the DAC-unit and the DAC-unit needs to be taken offline for service of the filter, such as removal and replacement of the sorbent material. This has the disadvantage of preventing any refurbishment of the filter during operation of the DAC-unit which results in loss of operating time which can be exacerbated by the need of structural repairs to the structure or supports of the filter structure.

Removing CO₂ from the atmosphere, commonly referred to as carbon capture or direct air carbon capture has been implemented on small and industrial scales. The economics of carbon capture are driven by the energy costs of the processes used and the filter or sorbent material used in the carbon capture process. Sorbent material can be produced to coat beads or spheres of plastic, polymer, or other suitable material. Some of the issues involved in the use of this type of sorbent material is the size of the individual beads and tendency of the beads to absorb moisture. The present invention provides a cost-effective and energy-effective way of holding loose particulate sorbent material for use in direct air capture of carbon (DAC).

Different methods of capturing CO₂ from the atmosphere or air are available, but the method of direct air capture by use of a solid amine loaded sorbent, in application specific configurations and shapes such as, spherical beads, flakes or pellets in a direct air capture unit or DAC-unit is discussed in detail below.

One process for capturing CO₂ from ambient air uses a solid sorbent that is manufactured as a solid bead or sphere that is coated with a sorbent material, such as an amine. The solid sorbent can absorb CO₂ molecules via reactions with amine groups coating the bead. During adsorption, air or atmosphere needs to be circulated around the sorbent coating to facilitate the removal or absorption of CO₂ from the air that is circulated across or around the solid sorbent. During desorption or the process of removing the absorbed CO₂ from the sorbent, the sorbent needs to be pneumatically sealed in a container, commonly referred to as an air contactor or simply "contactor", which serves as a containment vessel for the absorption and desorption cycles of the DAC-unit. The contactor allows for the CO₂ released from the sorbent during the desorption cycle to be isolated and collected. When a temperature swing across the sorbent media is used to release CO₂, the temperature of the contactor is raised, and the partial pressure of the CO₂ is lowered (percentage of CO₂ or the percentage of the total pressure that is contributed by CO₂). The latter can be done by purging the contactor with another medium and/or lowering the absolute pressure in the contactor. Typically, steam is used for both purging and heating of the sorbent. At the start of the desorption phase, the air pressure in the contactor is lowered by use of a vacuum pump, thereby lowering the amount of air that is mixed with the CO₂ produced during the desorption process of the DAC-unit.

Some of the challenges of DAC-units that utilize a solid amine loaded sorbent are the significant amount of heat and electricity demand required to operate both the adsorption and desorption cycles. The temperature swing requires raising the temperature of the sorbent media to a temperature above the absorption temperature (which requires raising the temperature of all the structures within the contactor) and the various cycles of the DAC-unit require fans and vacuum pumps to circulate or remove the various fluids, all of which require energy or heat. As discussed above steam can be used to heat the contactor, a DAC-unit that minimizes the amount of heat and or electricity required for operation is desirable. In order to minimize heat and or electrical requirements of a DAC-unit, a low thermal mass and enclosed volume can reduce the amount of energy needed for heating the contactor. The flow geometry and sorbent configuration, can reduce the amount of work required by a vacuum pump during desorption, and lowers the pressure drop through the sorbent filter which reduces the flow rate requirements of the fans used during the adsorption cycle to circulate air around the sorbent. In prior art DAC-units that utilized layers of horizontal sorbent beds have pressure drops across the sorbent filter of about 345 Pa.

A typical DAC-Unit operates via an absorption phase and desorption phase. The absorption and desorption phases operate by a temperature swing within the contactor to release the CO₂ absorbed from the atmosphere by the sorbent. The DAC-unit cycles through the absorption and desorption cycles on a time interval. The cycling of the DAC-unit is necessary to maximize the efficiency and economy of the DAC-unit and introduces additional structural requirements on the filter structure and material, such as ability to operate in a temperature range of -20 to +120 °C, high amounts of moisture, and vacuum pressures down to 0.05 Bar(A) within the contactor.

Sorbent filters need to provide a surface for directing a flow of air across the sorbent media or bed, the sorbent bed for interaction with the circulated air and a structure that supports the sorbent bed against the various thermal and mechanical forces applied to the sorbent filter during operation. Additionally, the operating conditions of the DAC-unit, and especially the use of steam, generates challenges as the beads of sorbent are known to absorb water and swell, causing an increase in volume which can result in movement, and cyclic pressure forces on the filtration structure and the support surfaces designed to hold the sorbent bed in place, and at the same time allow air and steam to flow through the sorbent bed. Over time the cyclical expansion and contraction of the beads can cause variations in sorbent bed thickness due to migration of the beads. This may also lead to some areas of the sorbent filter not being covered by sorbent, allowing air to pass through the structure of the sorbent filter without coming in to contact with the sorbent.

The sorbent media will degrade over time as exposure to Oxygen causes decomposition or degradation of the amine coating. Atmospheric air contains ~21% O₂ and a baseline amount of degradation is unavoidable with current formulations of amine. The temperature at which desorption occurs can accelerate degradation of the sorbent media which can be exposed to O₂ at higher temperatures, such as insufficient cooling or long time intervals required in cooling of the contactor due to heat soak of the structure. The operating interval of the DAC-unit is dependent on the service life of the sorbent filter media, which will require periodic replacement. The economics of a DAC-unit can be increased by continuous operation with low or lower energy requirements and maximized sorbent filter media service life which has the added benefit of reducing the time between service intervals.

### SUMMARY OF THE INVENTION

It is therefore a goal of the present invention to provide a sorbent filter which overcomes the above-mentioned disadvantage(s). In particular, a sorbent filter shall be provided, in which cost effective reuse of the support or frame structures is maximized without requiring replacement or refurbishment of the sorbent filter to occur within the DAC-unit, resulting in down time of the unit.

The object of the invention is achieved by, a sorbent filter for use in direct air capture of Carbon Dioxide includes a first support, an opposite second support, as well as a first mesh, and a second mesh connecting the first support with the second support, a frame defined by the first support, the second support, the first mesh and the second mesh, a cavity within the frame between the first mesh and second mesh, a sorbent filter media, wherein the cavity is filled with the sorbent filter media.

The object of the invention is achieved by, a sorbent filter assembly for use in direct air capture of Carbon Dioxide comprising: a plurality of sorbent filters, a support structure defining an inlet face, the support structure supported by a plurality of supports configured to position the support structure within a vessel, wherein the plurality of sorbent filters are attached to the support structure in a geometrical arrangement corresponding to a plurality of inlet passages in the inlet face.

The dependent claims describe advantageous developments and modifications of the invention.

The present invention improves the economics of prior art sorbent filters that use designs that use horizontal or substantially flat layers of sorbet material in filter structures that do not allow of quick removal for the sorbent filters or layers. Prior art designs where not designed for economical or continuous operation of the DAC-unit with an emphasis on reusability and serviceability of the sorbent filters and the DAC-unit as a whole. The present invention provides an economical sorbent filter that can be used with several varieties of sorbent filter media that does not require or make the sorbent filter media a structural component of the sorbent filter. Only the sorbent filter media of the present design needs to be replaced during a service interval which reduces cost but also reduces the amount of waste produced. Nor does the sorbent filter need to remain in situ within the DAC-unit in order to be serviced, allowing for quick replacement and increased operating time of the DAC-unit. The configuration of the present invention utilizes the first mesh and second mesh as part of the structural support of the frame, no additional supports are required to support the sorbent filter media in the cavity of the sorbent filter, reducing the thermal mass of the sorbent filter and the cost/complexity of manufacture. Prior art designs that use horizontal or flat designs which need to have sandwich mesh on both sides of the sorbent layers and/or additional bracing to keep an even sorbent bed across the entire filter, the frustoconical shape of the sorbent filter of the present invention contributes to the structural stability of the frame. This geometrically related strength saves material in two main ways, geometrically produced hoop stresses and limited or eliminated need for bracing to support the meshes. The hoop stress produced by the frustoconical shape allows for a single layer of thin mesh to be used as the outer mesh or first mesh without risking major local bulging during sorbent expansion. Secondly, there is no need for additional bracing to distribute the sorbent filter media within the cavity and control the sorbent bed thickness during operation. Additionally, it is possible to use a sandwich mesh (multi-layer mesh) as the inner mesh or second mesh to help prevent buckling failure inwards, as required by a particular design. In comparison to flat or horizontal designs which face difficulties with keeping an even thickness throughout the entire bed, where thinner layering may arise at attachment edges and points of the mesh with the support structure of the flat or horizontal filter.

Minimizing the amount of bracing in and around the sorbent filter media, and strategic placement of the attachment to the support structure on only one end of the sorbent filter helps to shift the thermal mass concentration away from and downstream from the sorbent filter media in the desorption stream during the desorption cycle. This improves the cycle time during the desorption cycle by allowing sorbent filter media to cool down faster than in horizontal designs. It also reduces accelerated degradation of sorbent filter media because the sorbent filter media is allowed to cool faster than the entire sorbent filter assembly. This is an improvement in comparison to the prior art or horizontal designs which have an evenly distributed thermal mass throughout the entire filtration structure.

In a preferred embodiment, the cavity is filled with sorbent filter media to a first sorbent fill level creating an expansion cavity defined by the unfilled space in the cavity. Sorbent filter media manufactured from amine coated beads or spheres of plastic or polymer are known to expand when exposed to moisture. This allows the sorbent filter media to expand into the expansion cavity to a second sorbent fill level which reduces or eliminates any stresses that could be placed on the frame or more specifically the first mesh and second mesh by the expansion of the individual amine coated beads. Any expansion of the sorbent filter media that is contained between the first mesh and second mesh will result in a mechanical force or pressure exerted on the meshes that pushes them apart. The combination of the expansion cavity and mesh design keeps the forces exerted on the meshes at or below the elastic deformation level for the mesh material. A preferred mesh or frame material is stainless steel based on its corrosion resistance and mechanical properties. The first mesh and second mesh can be manufactured from stainless steel with a yield strength of 205 MPa. By preventing plastic or permanent deformation of the meshes and frame gaps in the sorbent bed or a decrease in the sorbent fill level are prevented, either of which could result in the absorption flow bypassing the sorbent filter media. The frame is designed to distribute the expansion of the sorbent filter media evenly across the entire surface area of the first mesh and second mesh of the sorbent filter, reducing the risk of major bulging, non-nominal bed thickness, in one or more sections of the sorbent filter. The first mesh, second mesh, first support, second support, and flow shield are advantageously made of stainless steel, able to handle the expected operating conditions of the contactor of the DAC-unit, including temperature ranges of -20 to +120 °C, pressure ranges of 0.02 to 1.5 Bar(A), and expected flows or media, such as air, steam, water, CO2, and CO2 dissolved in water (acidic properties). In another arrangement structural parts can be made up of high-performance plastic capable of handling the expected operating conditions.

In a preferred embodiment, the sorbent filter includes a flow shield attached to the first mesh, the second mesh, and either of the first support or the second support. The expansion cavity creates an unfilled section of the cavity at one end of the sorbent filter. The flow shield solves the problem of absorption flow bypassing the sorbent filter media by creating a shielded area around the expansion cavity that extends below the first sorbent fill level or minimum level of sorbent filter media and forces the absorption flow through the sorbent filter media.

In a preferred embodiment, the sorbent filter includes a frustoconical shaped frame. The frustoconical shape provides a tubular or conical inlet surface defined by the second mesh and capped by the flow shield and second support, which improves the airflow of the sorbent filter by allowing for better area ratios between the inlet and outlet of the sorbent filter which helps to reduce the pressure drop in the sorbent filter as well as the entire DAC-unit. A reduced pressure drop reduces the amount of energy needed to operate the fans that circulate the absorption flows 316 through the sorbent filter. Simulations of the present invention have found the pressure drop through the sorbent filter to be between 180-230 Pa.

In a preferred embodiment, the first support of the sorbent filter includes an attachment structure. The attachment structure can be any known method of mechanical attachment that allows for removal, such as threads, quarter turn threads, bayonet connectors, magnets, threaded studs that pass through the support structure, or an interference fit. A "T" shaped attachment structure is used to mate with a mating keyhole or bayonet configuration in the support structure. This allows for the individual installation and removal of any particular sorbent filter.

In a preferred embodiment, the cavity between the first mesh and the second mesh is an annular cavity defined by the geometry of the frame. The cavity is a volume of empty space that can be defined by revolving the a cross section of the cavity around the central axis. The annular cavity can have thickness between 5-20mm. This allows for the cavity to be any shape required by the flow and structural requirements of a particular DAC-unit. This allows for the sorbent filter media to remain independent of the structure of the sorbent filter. In one arrangement the nominal bed thickness of the sorbent filter media is varied or tapered along the axial length of the frame, allowing for optimization of a constant and even airflow and pressure drop through the entire sorbent bed of the sorbent filter. In one arrangement the tapering cross section is varied, non-linear or curved, along the axial length of the frame, allowing for optimization of a constant and even airflow and pressure drop through the entire sorbent filter.

In a preferred embodiment, the sorbent filter media is a plurality of amine coated spheres or beads. The individual beads or spheres of sorbent filter media can be sized to the particular requirements of a DAC-unit. The size of the beads or spheres is advantageously small, between the range of 0.3 mm and 1.3mm in diameter. The size of the beads or spheres is large enough to be captured by the meshes and small enough to allow for even distribution within the cavity and allow for any necessary shifting or movement during the expansion of the sorbent filter media. The size and use of an amine coated plastic or polymer keeps the cost of the sorbent filter media low as no complex shapes or structural requirements are required by the sorbent filter media.

In a preferred embodiment, the first support, second support, first mesh, and second mesh are mechanically attached. This allows for the frame to be self supporting and independent of the sorbent filter media. Loose amine coated beads can be used to fill the cavity of a self supporting frame, reducing sorbent costs.

In a preferred embodiment, the first support or the second support is configured to allow access to the sorbent filter media. This allows for the sorbent filter media to be filled or removed from an individual sorbent filter, limiting replacement costs to removal and installation of new or refreshed sorbent filter media. Replacement of the sorbent filter media does not need to occur while the sorbent filter is installed in the DAC-unit, decreasing the amount of down time related to servicing the sorbent filter.

In a preferred embodiment, the structure of the first mesh and second mesh are elastically deformed by the expansion of the sorbent filter media. When the sorbent filter media is exposed to moisture, such as steam or water from the desorption cycle, the individual amine coated beads can expand and force the meshes apart, resulting in mechanical stresses on the meshes. The choice of material and inclusion of an expansion cavity allows for the mechanical stresses to stay at or below the elastic deformation limit for the material of the meshes. The meshes can be preferably manufactured from stainless steel with a yield strength of 205 MPa.

In a preferred embodiment, the first mesh or the second mesh further comprises a plurality of layers. The first layer or outer mesh can have apertures in the mesh pattern or structure that are between 0.2-0.5 mm, with a wire diameter between 0.05-0.2 mm. The apertures allow for the absorption flow to pass through the sorbent filter media and prevent the individual amine coated beads from escaping the sorbent filter. The second layer is a coarser mesh pattern than the first layer, with apertures in the range of 10-50 mm, preferably in the range of 25-50 mm and a wire diameter between 1-3 mm. The second layer adds structural stability to the meshes without adding a significant amount of thermal mass. Alternatively, a perforated sheet metal is used, with a thickness of 0.5-2 mm, preferably 0.1-1 mm, and an open area of 50 to 90 %, and preferably 75 to 90 %. The gap between the first mesh and second mesh defines the thickness of the sorbent bed of the sorbent filter media, the thickness of the sorbent bed is advantageously limited within a range of 5-25mm or more preferably between a range of 5-15mm to reduce the pressure drop required to force or circulate air through the sorbent filter media. In one embodiment the sorbent filter bed is 10 mm thick. In one embodiment the thickness of the sorbent bed is tapered between the preferred ranges along the axial length of the sorbent filter. In an embodiment the sorbent filter has an axial length between 500 and 1500 mm. In an embodiment the sorbent filter has a diameter between 50 and 200 mm. In an embodiment the sorbent filter has a length to diameter (L/D) ratio between 7.5 and 50. In one embodiment the L/D ration is 17.5. In one embodiment the pressure drop through the sorbent filter is in a range of 180-230 Pa.

In an embodiment the sorbent filter advantageously includes a flow shield that defines an expansion cavity within the frame of the sorbent filter. The flow shield and expansion cavity allow for the sorbent filter media to be filled to a first sorbent fill level and allows the sorbent filter media to expand to a second sorbent fill level, thereby reducing or eliminating the mechanical stresses that would result from the expansion of the sorbent media in a fixed cavity.

The sorbent filter assembly allows for a plurality of individual sorbent filters to be installed in a containment vessel known as an air contactor or "contactor." The configuration of the sorbent filters and sorbent filter assembly allows for the sorbent filters to be attached to the support structure via the attachment structure of each sorbent filter. A fully assembled sorbent filter assembly can be installed within the contactor as a single unit which saves installation time and costs. Additionally, the sorbent filter assembly can be serviced outside of the contactor to replace any number of individual sorbent filters. An additional advantage of the sorbent filter assembly, is the sorbent filters do not need to be removed to replace the sorbent filter media, the sorbent filter assembly only needs to be placed in a fixture that allows the access ports to empty used sorbent filter media and refill with new or refreshed sorbent filter media.

In a preferred embodiment, the plurality of sorbent filters are removable from the support structure. This increases the serviceability of the sorbent filter assembly and reduces refurbishment costs as only the sorbent filters that require replacement can be removed and replaced without the need of additional disassembly.

In a preferred embodiment, the sorbent filter assembly includes a drain. The desorption process of the DAC-unit utilizes steam which condenses into water when cooled. In order to prevent the sorbent filter media from coming into contact with additional moisture, the support structure includes a drain. The direction of the flow through the contactor may be reversed during the desorption cycle and the drain is advantageously configured with a check valve that prevents the absorption flow from bypassing the sorbent filters. The support structure includes drainage points where any residual condensate water from the desorption cycle can be drained through the structure, this can be implemented by small openings within the support structure, or a u-shaped water trap drains that reduces air bypass.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1A illustrates a perspective view of an inlet side of a sorbent filter assembly in accordance with one embodiment.
FIG. 1B illustrates a perspective view of a filter side of a sorbent filter assembly in accordance with one embodiment.
FIG. 2 illustrates a view in cross section of a section of a sorbent filter assembly accordance with one embodiment.
FIG. 3 illustrates a view in cross section of a sorbent filter in accordance with one embodiment.
FIG. 4 illustrates a perspective view of a sorbent filter in accordance with one embodiment.
FIG. 5A illustrates an aspect of the subject matter in accordance with one embodiment.
FIG. 5B illustrates a view in cross section of the sorbent filter of Figure 5A in accordance with one embodiment.
FIG. 5C illustrates a view along the central axis of the sorbent filter of Figure 5A in accordance with one embodiment.
FIG. 6A illustrates a view in cross section of one end of the sorbent filter of Figure 5A in accordance with one embodiment.
FIG. 6B illustrates a view in cross section of another end of the sorbent filter of Figure 5A in accordance with one embodiment.
FIG. 7A illustrates a view in cross section of one end of the sorbent filter of Figure 5A in accordance with one embodiment at a fist fill level of sorbent media.
FIG. 7B illustrates a view in cross section of one end of the sorbent filter of Figure 5A in accordance with one embodiment at a second fill level of sorbent media.
FIG. 8 illustrates a drain in accordance with one embodiment.

### DETAILED DESCRIPTION

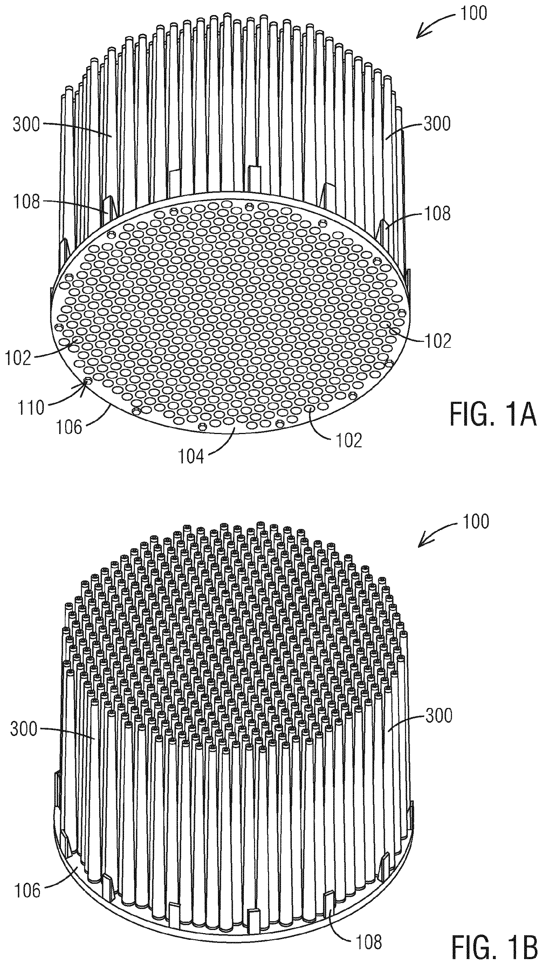

FIG. 1A is an embodiment of a sorbent filter assembly 100 for use in a contactor designed for direct air capture of Carbon Dioxide. To achieve a desired distribution of the sorbent filters 300 inside the contactor (not shown), the inlet face 104 of the support structure 106 has a series of inlet passages 102 that allow a fluid, such as atmospheric air, to enter the individual sorbent filters 300. The inlet passages 102 can be arranged in a fixed pattern or shape designed to maximize the number of sorbent filters 300 that can occupy the surface of the inlet face 104 or arranged to facilitate flow through the sorbent filter assembly 100. The individual sorbent filters 300 are designed to be removably attachable to the support structure 106 to facilitate installation and replacement of the sorbent filters 300. The sorbent filters 300 are attached to the support structure 106 via an attachment structure 502 that corresponds with an inlet passage 102 on the inlet face 104 of the support structure 106. The support structure 106 is designed to allow fluid passage at the inlet passages 102 and is solid material or sealed between the contactor and the rest of the inlet face 104. The support structure 106 is removably installed in the contactor via locking hardware located between the support structure 106 and the contactor. The sorbent filter assembly 100 allows for all of sorbent filters 300 to be removed from the contactor in one operation. To prevent the sorbent filter media 304 from coming in direct contact with water, the support structure 106 includes drainage points where any residual condensate water from the desorption process can be drained.

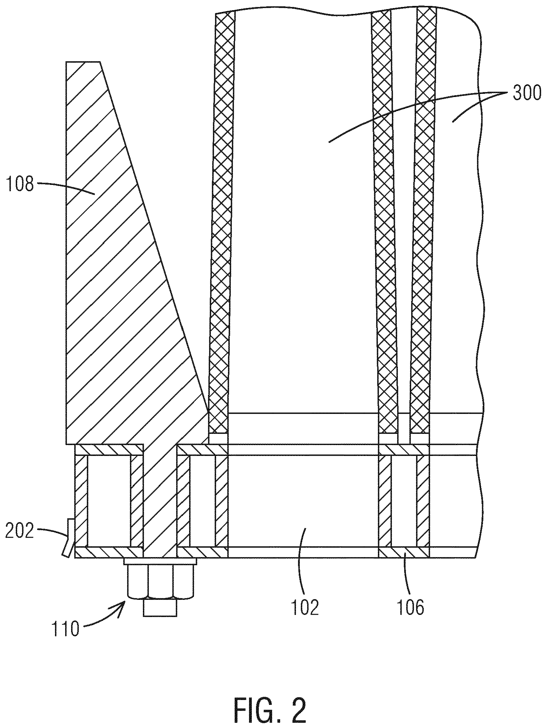

As seen in FIG. 2, when installed in the contactor the sorbent filter assembly 100 is supported by a plurality of hangers or supports 108 that rest on a surface of the contactor which defines the insertion depth or location of the sorbent filter assembly 100 and positions the seal 202 located on the outer circumference of the support structure 106 in contact with the mating surface of the contactor. Alternatively, the support structure 106 and contactor can seal with an overlapping geometry or any other known method. The seal 202 and support structure 106 prevent air flow from bypassing the sorbent filters 300 during the absorption cycle of the DAC-unit. In this embodiment the supports 108 are generally shaped as triangular gussets that are attached to the support structure 106 via attachment hardware 110, but a person skilled in the art would know that other shapes and configurations are possible. The sorbent filter assembly 100 allows for all of sorbent filters 300 to be removed from the contactor in one operation and replaced with a fresh sorbent filter assembly 100. During the desorption cycle steam is used to heat the sorbent filters 300 within the contactor. When the contactor and sorbent filter assembly 100 cool after the desorption cycle the steam will condense into water, to prevent the sorbent filter media 304 from coming in direct contact with water, the support structure 106 includes drainage points where any residual condensate water from the desorption process can be drained. The drainage points can include a check valve or flow restrictor to prevent the flow of water in the opposite direction, as required by the operation of the DAC-unit.

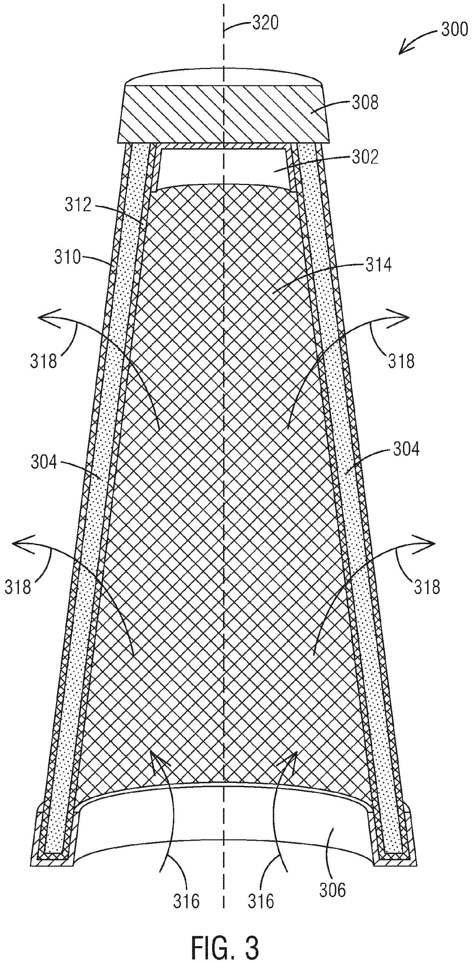

In one arrangement of a sorbent filter 300 seen in FIG. 3, the sorbent filter media 304 is contained in a frustoconical shaped sorbent filter 300 with annular supports or end caps on both ends, first support 306 and second support 308. Between the annular supports or end caps a first mesh 310 and a second mesh 312 which are attached to the first support 306 and second support 308 to define a frame 314. In this embodiment the frame 314 has a central axis 320 that extends from the first support 306 to the second support 308. The supports and meshes can be attached by any known method, including but not limited to welding, bolted connections or adhesives. The first mesh 310, second mesh 312, first support 306 and second support 308 are configured to create a void in the frame 314 between the first support 306 and second support 308 in the shape of a solid of revolution that is revolved around the central axis 320. In this embodiment the void is generally shaped as a frustoconical ring or solid of revolution with a thickness defined by the gap between the first mesh 310 and second mesh 312. The void is filled with the sorbent filter media 304 which can be a spherical bead of amine sorbent. The size and shape of the sorbent filter media 304 is designed to be contained by the first mesh 310 and second mesh 312, as well as allow for uniform distribution of the individual amine sorbent beads within the void. Specifically, the amine sorbent beads will not pass through the meshes and completely fill the void without unnecessary gaps that could allow unfiltered air to pass through the sorbent filter 300.

The structural requirements of the frame 314 includes resistance to the forces generated by the air flow against the sorbent filter media 304, the stresses generated by the expansion of the individual amine coated beads against one another and the structures of the sorbent filter 300, the thermal stresses produced during the various cycles of the DAC-unit, and the forces created when the contactor is at or near a vacuum. The meshes can advantageously be fabricated from layered or sandwiched mesh or any other suitable mesh configuration known in the art. The mesh needs to have sufficient structural properties to maintain the frustoconical shape of the frame 314 during all cycles of the DAC-unit. It is advantageous that the mesh configuration of the first mesh 310 and second mesh 312 are capable of generating or resisting a hoop stress of at least 205 MPa.

In an embodiment, the direction of the air flow or absorption flow 316 of the sorbent filter assembly 100 enters a particular inlet passage 102 on the inlet face 104 side of the support structure 106 that corresponds to a particular sorbent filter 300 and enters the corresponding first support 306. The sorbent filter 300 is designed with an expected air flow direction moving from the absorption flow 316 at the first support 306 to the post absorption flow 318. The inlet side thus has a hollow cap design of the first support 306 allowing air to enter inside the frame 314 while the opposite end has a closed second support 308 forcing the air to pass through the sorbent bed or sorbent filter media 304. The sorbent filter 300 may also include a flow shield 302 designed to further divert the absorption flow 316 through the sorbent filter media 304 by shielding the absorption flow 316 from flowing through the section of the sorbent filter media 304 that is adjacent to the second support 308. The flow shield 302 can be cup shaped or substantially cylindrical in shape, as required by the design of the frame 314. The sorbent filters 300 are mounted onto the support structure 106 using integrated fastening function or attachment structures 502 in the first support 306 and when all of the sorbent filters 300 are assembled on support structure 106 of the sorbent filter assembly 100 it can be installed into a contactor as an assembly. The second support 308 is designed with the possibility to be opened and closed to allow for emptying and filling of sorbent filter media 304 when the sorbent needs to be replaced.

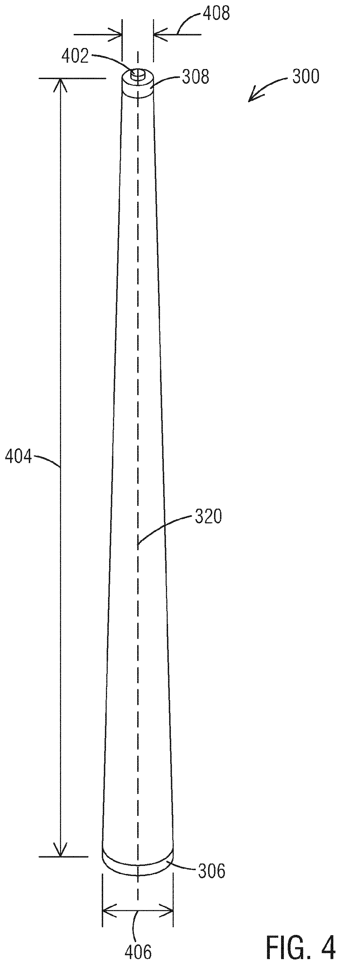

An embodiment of a frustoconical shaped sorbent filter 300, can be seen in FIG. 4. In this embodiment the sorbent filter 300 has an axial length 404 that extends from the first support 306 to the second support 308 along the central axis 320. The sorbent filter 300 has a first diameters 406 which in this embodiment is the maximum diameter, and a second diameter 408 which in this embodiment is a minimum diameter. This embodiment has a length to diameter ratio between 7.5 and 50. Testing has found a L/D ratio of ~17.5 is beneficial to maintaining a pressure drop between 180-230 Pa across the sorbent filter assembly 100 during the absorption cycle. The length 404 can be in a range of 500 to 1500 mm and the diameters can be in a range of 50 to 200 mm.

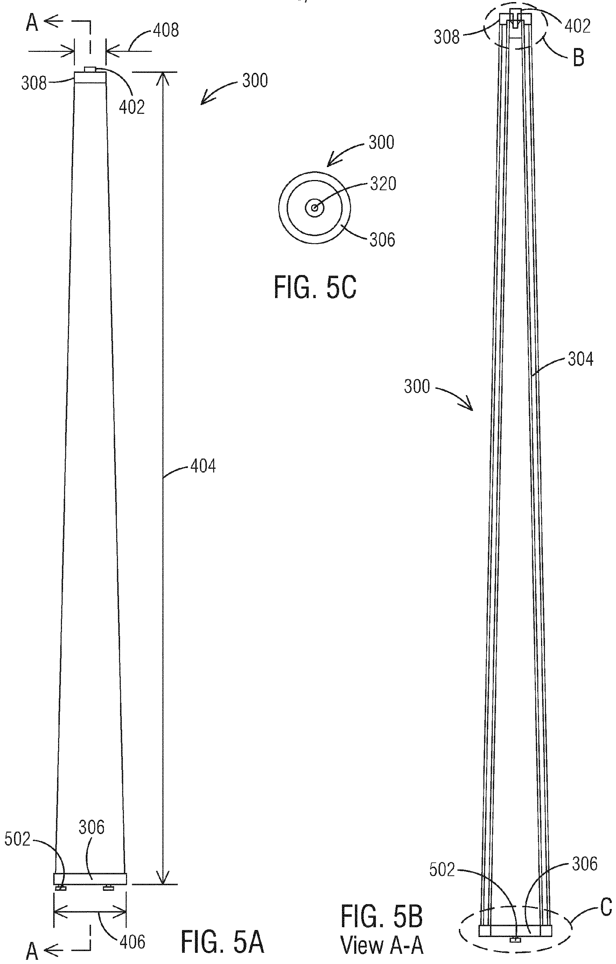

The embodiment of FIG. 4 is shown in a side view in FIG. 5A. The attachment structures 502 of the sorbent filter 300 are integrated into the first support 306. In this embodiment the attachment structures 502 are designed to mate with a keyhole feature of the support structure 106. A person skilled in the art would know that other configurations are possible for secure attachment of the sorbent filter 300 to the support structure 106 while allowing removability.

FIG. 5B is a view in cross section of FIG. 5A through plane A-A which passes through the central axis 320 of the sorbent filter 300.

FIG. 5C is a view of the bottom or first support 306 end of the sorbent filter 300 of FIG. 5A perpendicular and through the central axis 320.

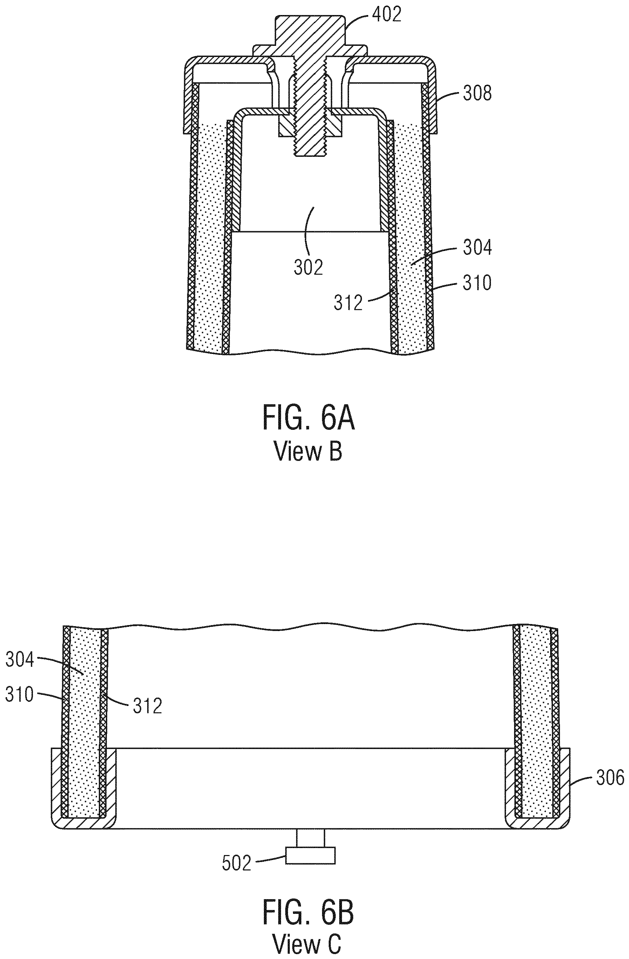

An enlargement in cross section of the first support 306 end of the sorbent filter 300 of FIG. 5A can be seen in FIG. 6B. The attachment structure 502 of the sorbent filter 300 is substantially "T" shaped and is designed to mate with a keyhole structure in the support structure 106 of the sorbent filter assembly 100.

An enlargement in cross section of the second support 308 end of the sorbent filter 300 of FIG. 5A can be seen in FIG. 6A. The flow shield 302 is attached to the second support 308 and prevents the absorption flow 316 from bypassing the sorbent filter media 304 along the axial length of the flow shield 302 as seen in FIG. 6A. In this embodiment the second support 308 includes an access port 402 that allows the void within the frame 314 to be filled with sorbent filter media 304 or after the service life of the sorbent filter media 304, allows for the removal and replacement of the sorbent filter media 304. In this embodiment the access port 402 is a threaded plug, a person skilled in the art would know that other configurations are possible.

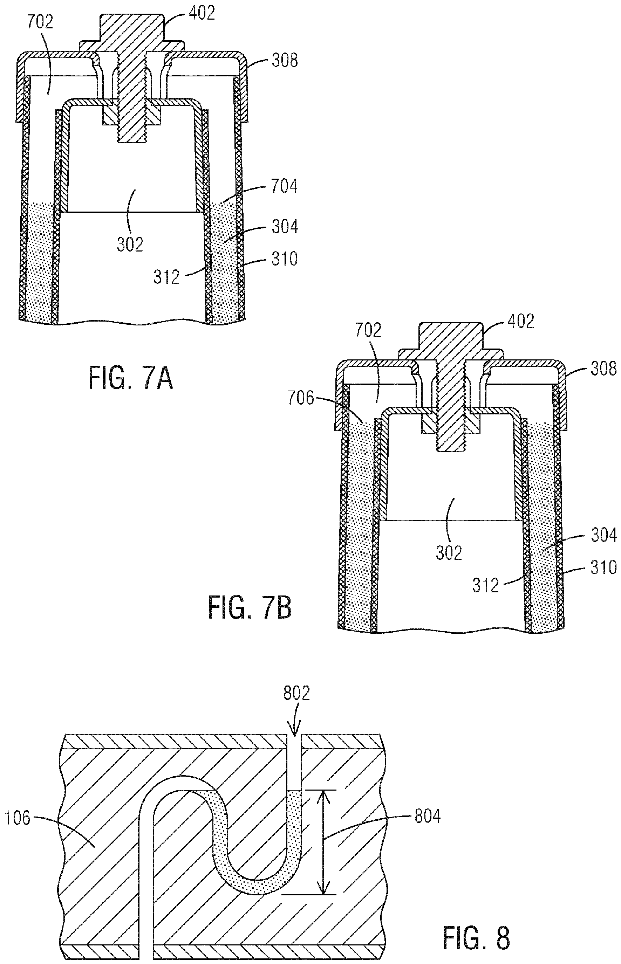

In an embodiment of the invention, the expansion cavity 702 within the frame 314 of the sorbent filter 300 is filled to a maximum first sorbent fill level 704. As seen in FIG. 7A, the flow shield 302 extends below the first sorbent fill level 704 in an initial or dry condition of the sorbent filter media 304. During the desorption cycle steam is used to release the captured carbon from the sorbent filter media 304 and after the desorption cycle the steam condenses as the contactor and sorbent filter assembly 100 cools. The sorbent filter media 304 is known to absorb moisture and expand or increase in volume as a result. The expansion of the sorbent filter media 304 can result in mechanical stresses within the frame 314. One advantage of the present invention is the configuration of the frame 314 and flow shield 302 allows for a reserve or expansion gap within the expansion cavity 702 to remain empty or partially empty so that the sorbent filter media 304 can expand within the expansion gap, up to the second sorbent fill level 706, when exposed to moisture. This advantageously eliminates or reduces the mechanical stresses exerted on the frame 314 due to the expansion of the sorbent filter media 304. Another advantage of the present invention is the configuration of the first mesh 310 and second mesh 312 allows for elastic deformation of the meshes during the expansion of the sorbent filter media 304, which prevents the formation of gaps within the sorbent bed due to plastic or permanent deformation of the meshes, such as lowering first sorbent fill level 704 below the flow shield 302. Additionally, the elasticity of the meshes will hold the sorbent filter media 304 in place within the frame 314 which prevents excessive migration or shifting during the expansion of the sorbent filter media 304.

In an embodiment of the invention seen in FIG. 8, the drainage point in the support structure 106 is a u-drain 802. The water trap height 804 of the u-drain 802 determines the amount of pressure required to operate the drain.

## Claims

1. A sorbent filter (300) for use in direct air capture of Carbon Dioxide comprising:
a first support (306), an opposite second support (308), as well as a first mesh (306), and a second mesh (308) connecting the first support (306) with the second support (308);
a frame (314) defined by the first support (306), the second support (308), the first mesh (310) and the second mesh (312);
a cavity (322) within the frame (314) between the first mesh (310) and second mesh (312);
a sorbent filter media (304);
wherein the cavity (322) is filled with the sorbent filter media (304).

2. The sorbent filter (300) of claim 1, wherein the cavity (322) is filled with sorbent media 304 to a first sorbent fill level (704) creating an expansion cavity (702) defined by the unfilled space in the cavity (322).

3. The sorbent filter (300) of any of the preceding claims further comprising a flow shield (302) attached to the first mesh 306, the second mesh 308, and either of the second support 308 or the first support 306.

4. The sorbent filter (300) of any of the preceding claims wherein the first support (306) further comprises an attachment structure (502).

5. The sorbent filter (300) of any of the preceding claims wherein the frame (314) is frustoconical in shape.

6. The sorbent filter (300) of any of the preceding claims wherein the cavity (322) between the first mesh (310) and second mesh (312) is an annular cavity defined by the geometry of the frame (314).

7. The sorbent filter (300) of any of the preceding claims wherein the sorbent filter media (304) is a plurality of amine coated spheres or beads.

8. The sorbent filter (300) of any of the preceding claims wherein the first support (306), second support (308), first mesh (310), and second mesh (312) are mechanically attached.

9. The sorbent filter (300) of any of the preceding claims wherein the first support (306) or the second support (308) is configured to allow access to the sorbent filter media (304).

10. The sorbent filter (300) of any of the preceding claims wherein the structure of the first mesh (310) and second mesh (312) are elastically deformed by the expansion of the sorbent filter media (304).

11. The sorbent filter (300) of any of the preceding claims where in the first mesh (310) or the second mesh (312) further comprises a plurality of layers.

12. The sorbent filter (300) of any of the preceding claims further comprising a flow shield (302) that defines an expansion cavity (702).

13. A sorbent filter assembly (100) for use in direct air capture of Carbon Dioxide comprising:
a plurality of sorbent filters (300),
a support structure (106) defining an inlet face (104), the support structure (106) supported by a plurality of supports (108) configured to position the support structure (106) within a vessel,
wherein the plurality of sorbent filters (300) are attached to the support structure (100) in a geometrical arrangement corresponding to a plurality of inlet passages (102) in the inlet face (104).

14. The sorbent filter assembly (100) of any of the preceding claims wherein the plurality of sorbent filters (300) are removeable from the support structure (106).

15. The sorbent filter assembly (100) of any of the preceding claims wherein the sorbent filter assembly (100) includes a drain.
